# EUROPÄISCHE PATENTSCHRIFT

(11) **EP 1 695 540 B1**
(45) Veröffentlichungstag und Bekanntmachung des Hinweises auf die Patenterteilung: **26.09.2012**
(21) Anmeldenummer: 04803931.7
(22) Anmeldetag: 16.12.2004
(51) Int. Cl.: G02B 21/36, H04N 1/047, G02B 21/00, G06T 7/00

(54) **VERFAHREN ZUR SCANNERANSTEUERUNG IN MINDESTENS EINER SCANACHSE IN EINEM LASER-SCANNING-MIKROSKOP**
METHOD FOR DRIVING A SCANNER IN AT LEAST ONE SCAN AXIS IN A LASER SCANNING MICROSCOPE
PROCEDE POUR COMMANDER UN SCANNEUR DANS AU MOINS UN AXE DE BALAYAGE D'UN MICROSCOPE A BALAYAGE LASER

(30) Priorität: 19.12.2003 DE 10359734
(43) Veröffentlichungstag der Anmeldung: 30.08.2006
(73) Patentinhaber: Carl-Zeiss Jena GmbH, 07745 Jena (DE)
(72) Erfinder: STEINERT, Jörg, 07743 Jena (DE)
(74) Vertreter: Hampe, Holger
(86) Internationale Anmeldenummer: PCT/EP2004/014318
(87) Internationale Veröffentlichungsnummer: WO 2005/064913

(56) Entgegenhaltungen:
- EP-A- 0 883 278
- DE-A1- 19 702 752
- US-A- 4 689 491
- US-A- 6 032 167
- US-A1- 2002 083 609
- US-B1- 6 650 441

## Beschreibung

Die Erfindung betrifft ein Verfahren zur Korrektur einer Schwingspiegel-Scanneransteuerung in einer oder zwei Scanachsen in einem Laser-Scanning-Mikroskop.

Aus US 6650441 B1 und EP 0883278 A2 ist es bekannt, bei linearen Scannern bidirektionale Positionsfehler zu korrigieren. Verfahren zur Schwingspiegel-Scanneransteuerung in einem Laser-Scanning-Mikroskop sind beispielsweise in DE 19702752 C2 beschrieben.

Trotz Kalibrierung (beispielsweise durch ein linearisiertes elektrisches Signal) der Scanner kommt es zur Ausfransung vertikaler Linien durch Phasenunterschiede zwischen Hin- und Rückscan (bidirektionale Abweichungen bidir), bedingt durch:
1. Langzeitveränderungen der Scannerresponse
2. Temperatur-/belastungs- bedingte Schwankungen
3. Zoomabhängigkeit der Scannerresponse

Dies soll durch die Erfindung verbessert werden.
Diese Aufgabe wird durch die Merkmale der Ansprüche und gelöst.
Bevorzugte Weiterbildungen sind Gegenstand der abhängigen Ansprüche.

Der Erfindung liegt die Idee zugrunde, eine Auswertung jedes Scanbildes durchzuführen, indem dieses auf bidirektionale Abweichungen untersucht wird und eine kontinuierliche Korrektur der Koeffizienten zur Scanneransteuerung während des Mikroskopbetriebs (z.B. zwischen den Scans) durchzuführen

Die Erfindung wird im weiteren anhand der schematischen Darstellungen näher erläutert.

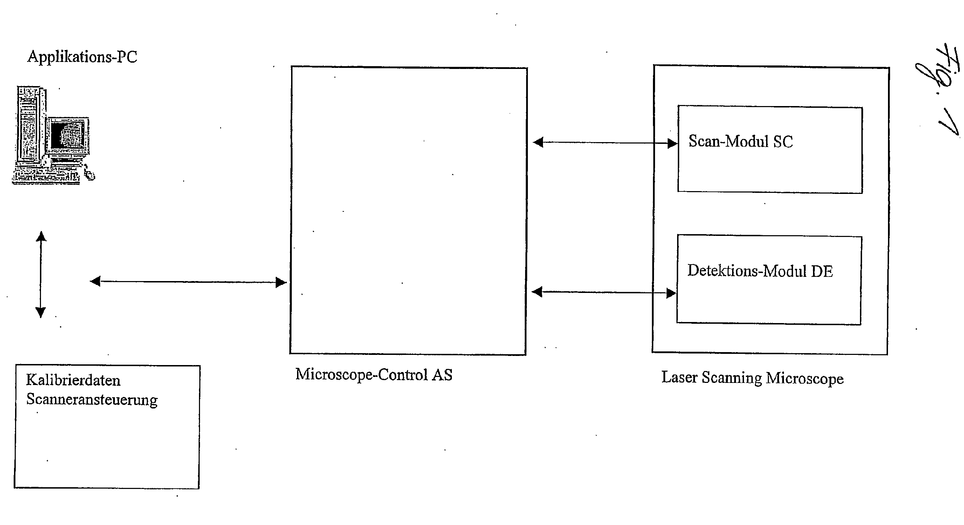

Fig.1 zeigt ein Laser Scanning Mikroskop LSM mit einem Scanmodul SC und einem Detektionsmodul DE.
Weitere Einzelheiten sind beispielsweise aus DE 19702753 A1 bekannt.
Über eine Ansteuereinheit AS, beispielsweise einen Echtzeitrechner , erfolgt eine Ansteuerung von SC und DE sowie die Rückkopplung der Erfassung des Ansteuerzustandes.
AS ist mit einem PC als Schnittstelle für den Anwender verbunden.
Die erfindungsgemäße Bildauswertung und Änderung der Ansteuerdaten für den Scanner kann im Echtzeitrechner oder im PC erfolgen.

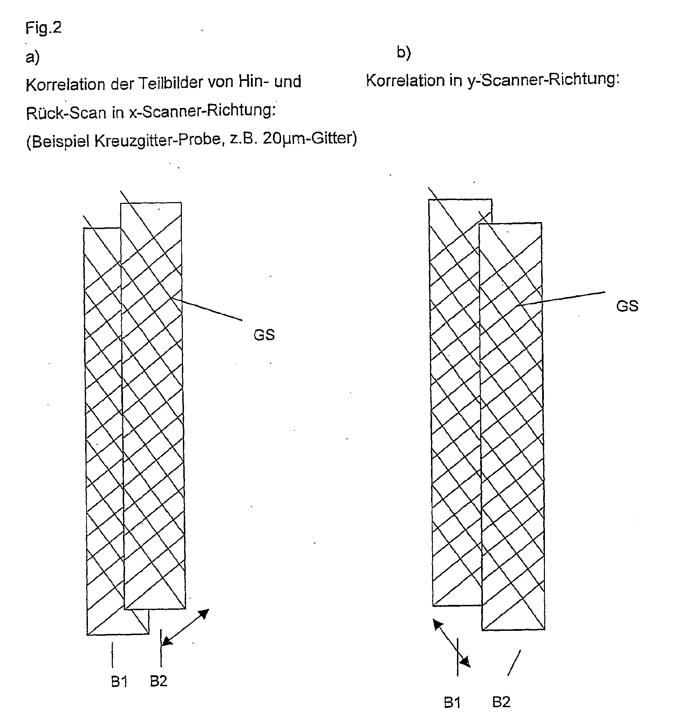

In Fig.2 ist beispielhaft das Grundprinzip dargestellt.
Hier sind anhand einer gescannten Kreuzgitterprobe mit Gitterstreifen GS die Teilbilder B1 , B2 für den Hin- und Rückscan dargestellt, in Fig. 2 a in X-Scanner Richtung und in Fig. 2b in Y - Scanner - Richtung.
Die Teilbilder B1, B2 werden jeweils zueinander versetzt und zueinander korreliert, d.h. durch Verschiebung zur Deckung gebracht und die Korrekturwerte ermittelt.

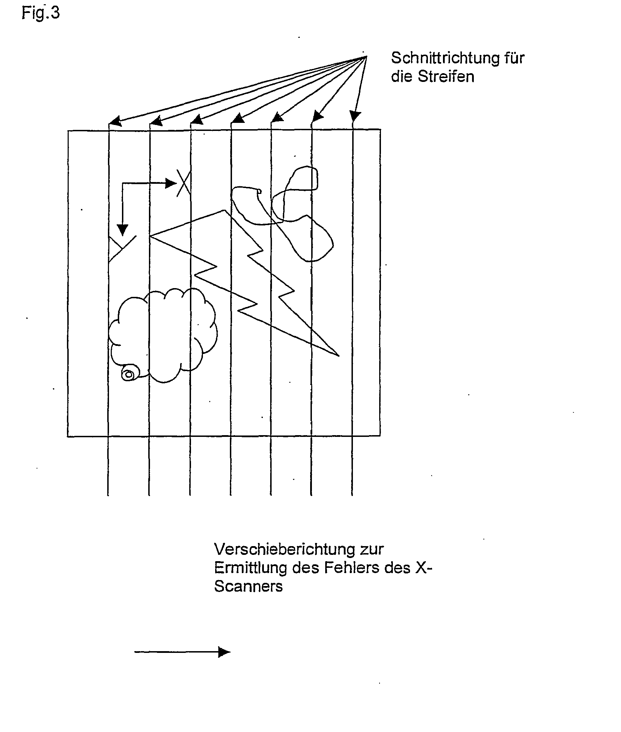

In Fig. 3 ist dargestellt, daß die Schnittrichtung streifenförmiger Teilbilder Bs zur Ermittlung des Fehlers des X-Scanners senkrecht zur X Richtung, d.h. in Y Richtung erfolgt (nicht gedrehter Scan).
Da der Y Scanner zwischen den Scanzeilen ruht, ist hier eine Ermittlung des Fehlers in Y Richtung nicht möglich.

Eine detaillierte Auswertung der durch die Zeilenbewegung der Scanner verursachten Bildverzerrungen ist möglich, wenn man das Bild senkrecht zu den Scanzeilen in Streifen schneidet und jeden Streifen für sich auswertet. In der Summe erhält man dann den Verlauf der bidirektionalen Abweichungen innerhalb einer Scanzeile. Die Kenntnis dieses Verlaufs ermöglicht eine bessere Korrektur als eine einfache, über das ganze Bild konstante, Verschiebung zwischen Hin - und Rückzeile.

### Variante nicht gedrehter Scan

Das bedeutet, das einer der Scanner als schneller Zeilenscanner (im Weiteren als X-Scanner bezeichnet) arbeitet und der andere Scanner als langsamer Zeilenscanner (im Weiteren als Y-Scanner bezeichnet). Der Y-Scanner springt vorteilhafterweise während der Umkehrphasen des X-Scanners von Zeile zu Zeile (Zeilenvorschub) und ruht während der eigentlichen Datenerfassung. Im Weiteren wird diese Drehrichtung des Scans als 0° Scanwinkel bezeichnet.
Die Schnittrichtung für die Streifen ist parallel zum Bildrand und für 0° Scanwinkel auch parallel zur Y Richtung.
Die Verschieberichtung zur Ermittlung des Fehlers des X-Scanners ist parallel zur Scanrichtung des X-Scanners, d.h. die beiden Teilbilder der geraden und ungeraden Scanzeilen (Hin- und Rückscan) werden zueinander entlang der Richtung im Bild verschoben, die durch Bewegung des X-Scanners vorgegeben ist, d.h. beim 0°-Scan parallel zu den Scanzeilen.
Eine Ermittlung des Fehlers des Y-Scanners ist beim 0° Scan nicht möglich (Y-Scanner ruht während der Scanzeilen).

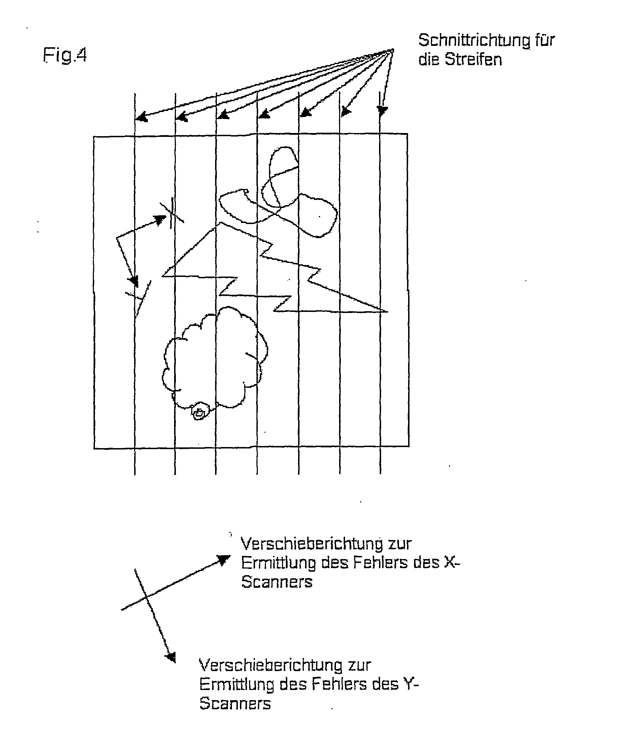

Fig. 4 zeigt den Fall eines gedrehten Scans (Scanwinkel ungleich 0°, 180°, 90° und -90°). In diesem Fall arbeiten beide Scanner synchron als Zeilenscanner. Zwischen den Scanzeilen springen beide Scanner vorteilhafterweise während der Umkehrzeiten beider Scanner zur nächsten Zeile. Durch die Einstellung der Scanamplituden beider Scanner wird der Scanwinkel eingestellt (Orientierung der Scanzeilen in der Probe). In diesem Fall erfolgt die Schnittrichtung für die streifenförmigen Teilbilder in einem Winkel zu den Scanrichtungen X und Y.
Die Schnittrichtung liegt auch hier im wesentlichen in Kantenrichtung des gescannten Bildes.
Zur Ermittlung des Fehlers des X Scanners erfolgt eine Verschiebung der Teilbilder von Hin- und Rückscan in X Richtung (Richtung des X-Scanners, nicht Richtung der Scanzeilen), zur Ermittlung des Y - Fehlers in Y Richtung (Richtung des X-Scanners, nicht Richtung der Scanzeilen).
Es wird jeweils die jeweilige Korrektur ermittelt und dann aus beiden Werten der Korrekturvektor bestimmt.

**Variante gedrehter Scan, d.h. Scanwinkel ungleich 0°, 90°, -90° und 180°:** X-Scanner und Y-Scanner bewegen sich schnell und beide Scanner springen ein kleines Stück zwischen den Zeilen.
Wenn beide Scanner mit gleicher Amplitude gleichzeitig loslaufen, läuft der Leuchtpunkt in der Probe nicht von links nach rechts sondern von links unten nach rechts oben (z.B.) → 45° gedrehter Scan. Wenn der Y-Scanner nur mit halber Amplitude läuft, dann geht der Lichtspot von links unten nach recht halb oben → ca. 22° Scanwinkel.... Zwischen den gedrehten Scanzeilen springen beide Scanner ein kleines Stück (konstanter Offset der Bewegung überlagert), so dass die nächste Scanzeile neben der letzten liegt.
Die Schnittrichtung für die Streifen ist auch hier vorteilhafterweise (?) parallel zum Bildrand, senkrecht zur Richtung der Scanzeilen.

Die Verschieberichtung zur Ermittlung des Fehlers des X-Scanners ist parallel zur Scanrichtung des X-Scanners, d.h. die beiden Teilbilder der geraden und ungeraden Scanzeilen (Hin- und Rückscan) werden zueinander entlang der Richtung im Bild verschoben, die durch Bewegung des X-Scanners vorgegeben ist (Die Richtung entlang der sich der Beleuchtungsfleck in der Probe bewegen würde, wenn der X-Scanner sich alleine bewegen würde).
Die Verschieberichtung zur Ermittlung des Fehlers des Y-Scanners ist parallel zur Scanrichtung des Y-Scanners

Es kann auch sinnvoll sein, zur Ermittlung des zeitlichen Verlaufs der Bildverzerrung das Bild zusätzlich parallel zur Richtung der Scanzeilen zu zerteilen.

Bei gedrehten Scans scannen die Scanner nicht entlang der Scanzeilen, sondern "schräg" durch das Bild. Wesentlich für die Bidir-Abweichungen sind dann die Richtungen beider Scannbewegungen, nicht die Richtung der Scanzeilen.

Die Bestimmung der Bidir-Abweichungen geschieht wie folgt:
- Zerschneiden des Bildes in (z.B.) 10 gleich breite Streifen vorzugsweise entlang der langsamen Scanachse (senkrecht zur schnellen Achse schneiden)
- Zerteilen der Streifen in die beiden Teilbilder vom Hinscan und Rückscan (evtl. auffüllen der fehlenden Zeilen mit Mittelwert der benachbarten Zeilen)
- Berechnung der (eindimensionalen) Kreuzkorrelationsfunktionen der beiden Teilbilder entlang der beiden Scanrichtungen (Die folgende Auswertung erfolgt für beide Scanrichtungen, um beide Scanner korrigieren zu können)
   o beim Verschieben der beiden Teilstreifen zueinander können natürlich die gesamten Bilddaten genutzt werden, d.h. fehlende Daten im Randbereich der Teilbilder werden aus den Nachbarstreifen genommen
- Auswertung dieser Korrelationsfunktionen:
   o Lage des Maximums: bei dieser Verschiebungslänge passen die beiden Teilbilder am besten zusammen, d.h. diese Verschiebung ist die gewünschte Korrektur der Bidir-Abweichung an der Bild-Position, an der sich der Streifen befindet
   o Halbwertsbreite und Höhe des Peaks: Maß für die Genauigkeit der Messung
   Die Kreuzkorrelationsfunktion ist z.B. auf die Autokorrelation(en) der beiden Teilbilder normiert, d.h. Korrelation 1 heißt, die beiden Teilbilder stimmen bei dieser Verschiebung exakt überein.
- bei Rotationswinkeln die weniger als (z.B.) 10° von einer Hauptachse eines Scanners abweichen, sollte nur dieser Scanner ausgewertet werden. (z.B. beim 0°-Scan kann nur der X-Scanner ausgewertet werden)
- Die Positionen der Peaks der einzelnen Bildstreifen liefern pro Scanrichtung (x,y) eine Kurve mit beispielsweise 10 Stützstellen (Anzahl der Bildstreifen) für die Bidir-Abweichung im Bild.
- Je nach Genauigkeit der Messung (Halbwertsbreite und Höhe des Kreuzkorrelationspeaks) sollten diese Stützstellen vorteilhafterweise mit Wichtungsfaktoren markiert oder, wenn unbrauchbar, verworfen werden.

Die Korrektur der Scanneransteuerung erfolgt vorteilhafterweise über die Koeffizienten der Fourierreihen von den Signalkurven der ScannerAnsteuersignale.
Die Korrektur der Scanner-Koeffizienten geschieht dann wie folgt:
- Ermittlung des Scanner-Koeffizienten, der die gefundene Abweichungskurve am besten korrigiert
   Korrelation der gemessenen Abweichungskurve mit sin(1f), sin(2f), sin(3f),....
   (welcher Koeffizient liefert maximale Korrelation mit der gemessenen Abweichungskurve?)
- Aus dem Korrelationswert lässt sich der Phasenfehler des Koeffizienten berechnen
   (große Amplitude der Abweichungskurve = großer Phasenfehler des Koeffizienten)
   Wenn die Abweichung nur von einem Koeffizienten verursacht wird ist es immer eine Sinuskurve mit Knotenpunkten an den Umkehrpunkten der Scanner (außerhalb des Bildes)
- Korrektur der Phase des Koeffizienten (Amplitude wird vorteilhafterweise nicht verändert um die Linearität der Scannerbewegung langfristig zu erhalten)
- Die Phase des betroffenen Koeffizienten könnte auch nicht vollständig korrigiert werden, je nach Qualität der Messung (Wichtungsfaktoren, siehe oben)
   Die entgültige Korrektur erfolgt dann z.B. während der nächsten Scanbilder.
- Auf diese Weise könnte mit jedem Scan (mindestens) ein Koeffizient korrigiert werden. Durch Korrelation der Abweichungskurve mit mehreren Scannerfrequenzen lassen sich in einem Schritt auch mehrere Koeffizienten korrigieren (je nach Genauigkeit der Messwerte)

Im Laufe der Zeit kann dann auf dem Steuerrechner des Mikroskopes ein Parameterfeld entstehen mit Scannerkoeffizienten, die permanent angepasst werden.
Die Parameter sind beispielsweise: Speed, Zoom (z.B. Zoom 0.7, 0.8, 1, 2, 4, 8)
Wird ein Zwischenzoom benutzt, so kann aus den Nachbarkoeffizienten interpoliert werden, analog können nach einer erfolgten
Abweichungsmessung die Nachbarkoeffizienten (auch mit Wichtung) angepasst werden.
Das Parameterfeld auf der Festplatte kann sich vorteilhafterweise sich nur langsam verändern (z.B. gewichtetes Mittel zwischen Tagesmittelwert und jetzigem Wert in den Dateien)
Daneben könnte es ein weiteres relativ schnell veränderliches Parameterfeld geben, dass z.B. auf Temperaturschwankungen während des Tages reagiert. (Nach Möglichkeit wird nach jedem Bild ausgewertet).
Eine Korrektur der aktiven Koeffizienten könnte auch bei Abweichungen größer als eine vorgegebene Schwelle erfolgen (beispielsweise vom Nutzer einstellbarer Wert)
Dieses Parameterfeld wird ebenfalls aufgezeichnet und gespeichert.
Je nach Schwankungsbreite und Qualität dieser Tages-Parameter könnte beim Beenden des LSM-Programms, das auf der Festplatte gespeicherte Feld angepasst werden (mögliche Parameter für die Wichtung: Schwankungsbreite der gemessenen Abweichungen, Werteanzahl, Betriebsstunden etc).
Die Online-Korrektur kann ausschaltbar sein, d.h. der Nutzer kann die Möglichkeit haben den Mechanismus der automatischen Korrektur der Scanneransteuerung zu aktivieren oder zu unterbinden. Der Original-Kalibriersatz ab Werk kann für Auswertungen der Entwicklung des mechanischen und elektrischen Verhaltens der Scanner dauerhaft als Kopie gespeichert werden. Der Parametersatz auf der Festplatte kann auch rücksetzbar sein (anhand der Originalkalibrierung).
Ein Vergleich des entstandenen Parametersatzes mit dem Original-Satz könnte z.B. zu einer Empfehlung auf dem Bildschirm für den Benutzer führen "Bitte Scanner neu kalibrieren" (Der Schwellwert könnte je nach Scan-Speed unterschiedlich sein).
Bei Mehrkanalbildern (während des Scans werden z.B. zu jedem Bildpixel mit mehreren Detektoren unterschiedliche Daten aufgenommen) könnten alle Kanäle getrennt ausgewertet und verglichen werden (die Scannerbedingte Bildverzerrung sollte in allen Bildern gleich sein).
Durch die beschriebene Korrektur ist neben der verbesserten Bidirektionalität auch eine Verbesserung der Linearität möglich, da die Koeffizienten bezüglich ihrer Phase exakt zurecht gerückt werden.

## Patentansprüche

1. Verfahren zur Korrektur einer Schwingspiegel-Scanneransteuerung in einer oder zwei Scanachsen (X, Y) in einem Laser-Scanning-Mikroskop, wobei das Scanfeld unter einem Winkel zu der ersten, schnellen Scanachse (X) in Streifen unterteilt wird und die Streifen jeweils in ein erstes Teilbild (B1) aus Hinscanzeilen und in ein zweites Teilbild (B2) aus Rückscanzeilen zerteilt werden, wobei für jeden Streifen das erste Teilbild (B1) mit dem zweiten Teilbild (B2) verglichen und eine Verschiebung als Abweichung zwischen den ersten und zweiten Teilbildern (B1, B2) ermittelt wird, und die Abweichungen zwischen den ersten und zweiten Teilbildern (B1, B2) als Stützstellen zu einer Abweichungskurve zusammengefasst werden und diese Abweichungskurve zur Ermittlung einer Korrektur der Scanneransteuersignale verwendet wird.

2. Verfahren nach Ansprüch 1, wobei aus Korrelationen der Teilbilder (B1, B2) Abweichungen ermittelt werden.

3. Verfahren nach einem der vorangehenden Ansprüche, wobei für jede Scanachse (X, Y) Korrelationen der Teilbilder (B1, B2) bestimmt werden.

4. Verfahren nach Anspruch 2 oder 3, wobei die Verschiebungen ermittelt werden, indem die Teilbilder (B1, B2) längs der ersten Scanachse (X) und/oder längs der zweiten Scanachse (Y) so verschoben werden, dass sie am besten zusammenpassen.

5. Verfahren nach einem der vorangehenden Ansprüche, wobei zur Ermittlung der Korrektur der Scanneransteuerung die Abweichungskurve mit den einzelnen Frequenzanteilen der Scannersteuerung korreliert wird und über die Korrelationswerte Korrekturwerte für die Scannersteuerung ermittelt werden.

6. Verfahren nach einem der vorangehenden Ansprüche, wobei Korrekturwerte gemeinsam mit der Uhrzeit der Messung abgespeichert werden.

7. Verfahren nach einem der vorangehenden Ansprüche, wobei ein Vergleich von zu unterschiedlichen Zeiten aufgenommenen Korrekturwerten erfolgt.

8. Verfahren nach einem der vorangehenden Ansprüche, wobei der Frequenzgang der Scanner mit den ermittelten Korrekturwerten korrigiert wird.

9. Verfahren nach einem der vorangehenden Ansprüche, wobei die Unterteilung senkrecht zu der ersten Scanachse erfolgt.

10. Verfahren nach einem der vorangehenden Ansprüche, wobei ein Testmuster zur Ermittlung der Korrektur verwendet wird.

11. Laser- Scanning- Mikroskop (lsm) mit einem Schwingspiegelscan Modul (sc), einem Detektionsmodul (DE) und einer Steuereinheit (AS), die Steuereinheit eingerichtet zur Durchführung des Verfahrens nach einem der vorhergehenden Ansprüche.

## Claims

1. Method for correcting an oscillating mirror scanner drive in one or two scan axes (X, Y) in a laser scanning microscope, in which the scan field is subdivided into strips at an angle to the first, fast scan axis (X), and the strips are respectively split into a first partial image (B1) composed of forward scan lines and into a second partial image (B2) composed of return scan lines, in which for each strip the first partial image (B1) is compared with the second partial image (B2), and a displacement is determined as a deviation between the first and second partial images (B1, B2), and the deviations between the first and second partial images (B1, B2) are combined as interpolation points to form a deviation curve, and said deviation curve is used to determine a correction of the scanner drive signals.

2. Method according to Claim 1, in which deviations are determined from correlations of the partial images (B1, B2).

3. Method according to one of the preceding claims, in which correlations of the partial images (B1, B2) are determined for each scan axis (X, Y).

4. Method according to Claim 2 or 3, in which the displacements are determined by displacing the partial images (B1, B2) along the first scan axis (X) and/or along the second scan axis (Y) so that they match one another best.

5. Method according to one of the preceding claims, in which in order to determine the correction of the scanner drive the deviation curve is correlated with the individual frequency components of the scanner drive, and correction values for the scanner drive are determined via the correlation values.

6. Method according to one of the preceding claims, in which correction values are stored together with the time of day of the measurement.

7. Method according to one of the preceding claims, in which correction values recorded at different times are compared.

8. Method according to one of the preceding claims, in which the frequency response of the scanners is corrected with the determined correction values.

9. Method according to one of the preceding claims, in which the subdivision is performed perpendicularly to the first scan axis.

10. Method according to one of the preceding claims, in which a test pattern is used to determine the correction.

11. Laser scanning microscope (LSM), having an oscillating mirror scan module (SC), a detection module (DE) and a control unit (AS), which is set up to carry out the method according to one of the preceding claims.

## Revendications

1. Procédé de correction d'une commande de scanner à miroir oscillant dans un ou deux axes de balayage (X, Y) dans un microscope à balayage à laser, le champ de balayage suivant un angle par rapport au premier axe de balayage rapide (X) étant divisé en bandes et les bandes étant respectivement divisées en une première image partielle (B1) composée de lignes de balayage aller et en une deuxième image partielle (B2) composée de lignes de balayage retour, la première image partielle (B1) étant comparée à la deuxième image partielle (B2) pour chaque bande et un décalage étant déterminé comme une déviation entre la première et la deuxième image partielle (B1, B2), et les déviations entre la première et la deuxième image partielle (B1, B2) étant regroupées en tant que points de référence pour une courbe de déviation et cette courbe de déviation étant utilisée pour la détermination d'une correction des signaux de commande du scanner.

2. Procédé selon la revendication 1, selon lequel des déviations sont déterminées à partir de corrélations des images partielles (B1, B2).

3. Procédé selon l'une des revendications précédentes, selon lequel des corrélations des images partielles (B1, B2) sont déterminées pour chaque axe de balayage (X, Y).

4. Procédé selon la revendication 2 ou 3, selon lequel les décalages sont déterminés en ce que les images partielles (B1, B2) sont décalées le long du premier axe de balayage (X) et/ou le long du deuxième axe de balayage (Y) de manière à ce qu'elles coïncident au mieux.

5. Procédé selon l'une des revendications précédentes, selon lequel, pour déterminer la correction de la commande du scanner, la courbe de déviation est corrélée avec les composantes de fréquence individuelles de la commande du scanner et des valeurs de correction pour la commande du scanner sont déterminées par le biais des valeurs de corrélation.

6. Procédé selon l'une des revendications précédentes, selon lequel les valeurs de correction sont mémorisées conjointement avec l'heure de la mesure.

7. Procédé selon l'une des revendications précédentes, selon lequel une comparaison des valeurs de correction enregistrées à différentes heures est effectuée.

8. Procédé selon l'une des revendications précédentes, selon lequel le pas de fréquence du scanner est corrigé avec les valeurs de correction déterminées.

9. Procédé selon l'une des revendications précédentes, selon lequel la division s'effectue perpendiculairement au premier axe de balayage.

10. Procédé selon l'une des revendications précédentes, selon lequel un modèle de test est utilisé pour déterminer la correction.

11. Microscope à balayage à laser (LSM) comprenant un module de balayage à miroir oscillant (SC), un module de détection (DE) et une unité de commande (AS), l'unité de commande étant configurée pour mettre en oeuvre le procédé selon l'une des revendications précédentes.
